(19) Europäisches Patentamt
European Patent Office
Office européen des brevets

(11) **EP 2 336 068 A1**

(12) **EUROPEAN PATENT APPLICATION**

(43) Date of publication:
**22.06.2011 Bulletin 2011/25**

(51) Int Cl.:
***B66B 1/30*** (2006.01)

(21) Application number: **10382340.7**

(22) Date of filing: **21.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.12.2009 ES 200931207**

(71) Applicant: **Orona, S. Coop.**
**20120 Hernani (Guipuzcoa) (ES)**

(72) Inventors:
• **Gonzalez Gil, Antonio**
**20120, Hernani (Guipúzcoa) (ES)**
• **Luri Bravo, Sergio**
**20500, Mondragon (Guipúzcoa) (ES)**

(74) Representative: **Carpintero Lopez, Francisco et al**
**Herrero & Asociados, S.L.**
**Alcalá 35**
**28014 Madrid (ES)**

(54) **Energy management method and system for an electric motor**

(57) The invention relates to an energy management method and system for an electric motor (1), preferably a traction motor of an elevator system, wherein an energy manager (4) controls the energy flow between an electric network (3, 3'), energy storage media (2) and the electric motor (1), such that it provides energy to the motor (1) when it requires it; stores energy from the motor (1) in the storage media (2) when it operates according to a mode of operation in which it generates energy, and when said motor is stopped, or its energy consumption is below a limit, stores energy of the electric network (3, 3') in the storage media (2) until reaching a determined threshold (Eth_1).

FIG. 1

EP 2 336 068 A1

**Description**

Field of the Invention

The present invention relates to the field of power supply systems for electric motors, and more specifically, to an energy management system for such motors, specifically applicable to an elevator system.

Background of the Invention

Generally, elevator systems, in their energy part, are based on a drive controlling the speed of a traction motor, which drives a traction sheave which, in its rotational movement, moves by adhesion the ropes which support the elevator car on one hand and a counterweight on the other hand. Depending on its mode of operation, the motor can consume (operation under traction) or generate electric energy. The operation under traction is not limited to accelerations. This is due to the fact there is a counterweighing, generally at 50% of the maximum load that the car can carry. Therefore, if the car is empty, a downward trip involves a traction operation which consumes energy, and an upward trip is a braking or energy generation operation. On the contrary, if the car is loaded with more than 50% of the maximum load, a downward trip involves a braking operation, and an upward trip is a traction operation.

Traditionally, the energy used by said motor is given by a conventional three-phase electric network, and in the cases in the motor works as a generator (second mode of operation), the energy that is generated is dissipated into a braking resistance.

The traditional system described involves an inefficient use of energy, having been improved in the state of the art by means of incorporating local storage media which allow storing the energy generated during the braking phases, being able to be subsequently reused when the motor passes to consuming energy. A reduction of the network energy consumed, as well as the maximum peak power to be extracted from said network, is thus achieved.

WO 2001/74699 discloses a system with these features, in which the energy storage media are ultracapacitors which store the energy generated by the motor and reuse such energy to supply power to the motor during the consumption peaks thereof. Although this system reduces the energy peaks to be extracted from the electric network, it still has a total consumption of said network which is susceptible of being optimized. Similar systems in which the ultracapacitors are replaced with batteries are also known, the storage media being able to be both in parallel with the electric network with respect to the motor, and in series between the electric network and the motor.

Other systems, such as the one disclosed in WO 2001/74703 for example, also include energy storage media, although in this case, in order to supply energy to the motor in emergency situations in which the supply from the electric network fails, allowing the motor to take the car to a floor and therefore evacuate the passengers (i.e., to perform an automatic rescue).

Nevertheless, there is still a need for an energy management system which maintains these safety features (automatic rescue) and which at the same time reduces the peak power which needs to be extracted from the electric network, as well as the total energy consumption of said network, allowing the reduction of the contract demand and even using , a low-power single-phase network instead of a three-phase network as a power supply network.

Summary of the Invention

The present invention solves the problems described above by means of an energy management between an electric motor (preferably a traction motor of an elevator system or the like), an electric network, and energy storage media (for example batteries or ultracapacitors), which varies according to the modes of operation of said motor to optimize the consumption of the electric network, even allowing the use of a low-power single phase network.

In a first aspect of the invention, an energy management method for at least one electric motor is disclosed, which method controls the energy flows between said motor, the electric network, and energy storage media, according to the modes of operation of the motor and an energy level of said storage media, as described below:

-   If the motor generates energy, the generated energy is stored in the storage media. If the maximum capacity of said storage media is exceeded, the surplus energy is dispersed in the form of heat by means of a braking circuit.
-   If the motor is stopped, or consumes energy below a supply threshold of the network, energy of the electric network is stored in the storage media.
-   If the motor consumes energy, said energy is provided thereto, preferably from the electric network to a supply limit ($P_{max}$), completing the rest of the required energy from the storage media. Preferably, for the particular case of elevator systems, the energy stored in the storage media is not below a second safety threshold, which allows performing emergency maneuvers (or safety mode of operation) when there is a failure in the electric network, allowing the car to move to the height of a floor and to carry out the evacuation of its occupants.

In a second aspect of the invention, a system is disclosed which implements the described method by management means directing the energy flow as has been described for the method of the invention, acting on power converters connected to the different elements of the system.

The optimization of the energy behavior of the system is thus achieved, reducing the consumption and peak power provided by the electric network, and even allowing the use of single-phase networks for the power supply of the system.

Brief Description of the Drawings

For the purpose of aiding to better understand the features of the invention according to a preferred practical embodiment thereof and to complement this description, the following illustrative and non-limiting figures are attached as an integral part thereof:

Figure 1 shows a diagram of the system of the invention according to a first embodiment thereof for three-phase networks.

Figure 2 shows a diagram of the system of the invention according to a second embodiment thereof for single-phase networks.

Figure 3 shows a diagram of the system of the invention according to a third embodiment thereof, also for single-phase networks.

Figure 4 shows a diagram of the energy levels of the energy storage media and of their corresponding thresholds.

Figure 5 shows graphs which exemplify the energy exchange between the system, the electric network and the motor.

Detailed Description of the Invention

In this text, the term "comprises" and its derivatives (such as "comprising", etc.) must not be understood in an excluding sense, i.e., these terms must not be interpreted as excluding the possibility that what is described and defined can include more elements, steps, etc.

Despite the fact that this description is detailed for an elevator system, it must be understood as a non-limiting example, the method and system of the invention being valid for any electric motor capable of both consuming and generating energy.

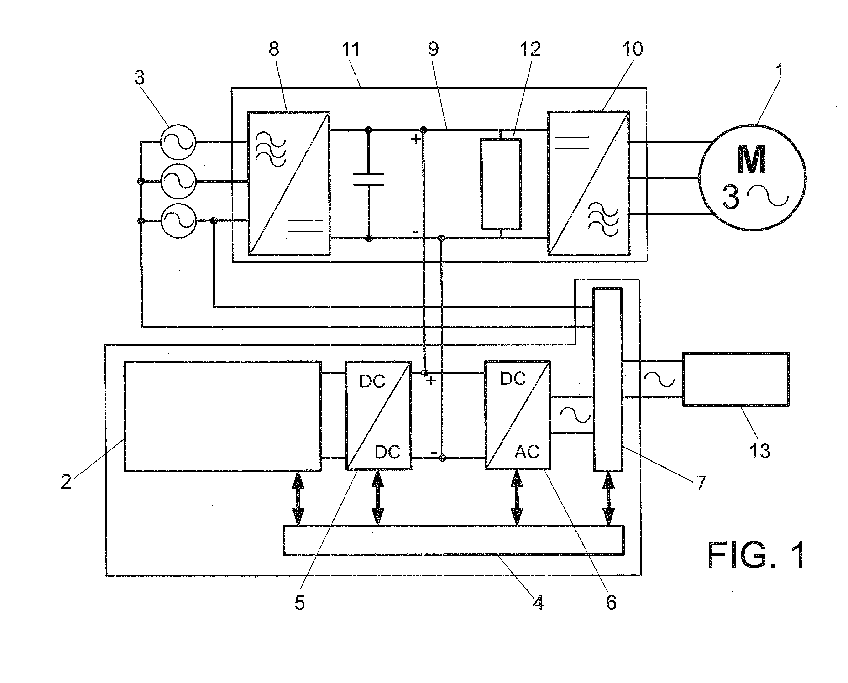

Figure 1 shows a diagram of the system of the invention according to a particular embodiment thereof which uses a three-phase electric network 3 as a power supply. In said embodiment, a motor 1 is connected to the electric network 3 through a variator 11, which comprises a rectifier 8, an inverter 10 and a braking circuit 12 connected to a direct current (DC) bus 9. The system of the invention is connected to the variator 11 through said DC bus 9. Specifically, a (DC/DC) power converter 5 and a direct current-to-alternating current (DC/AC) converter 6 are connected to the DC bus 9, the (DC/DC) power converter and the direct current-to-alternating current (DC/AC) converter in turn being connected to one another. Additionally, the power converter 5 is connected to storage media 2 (also indistinctly called "storage unit" and "storage system" herein), for example a bank of ultracapacitors (i.e., capacitors with a large great capacity, also referred to as supercapacitors), of batteries, a hybrid of ultracapacitors and batteries, or any other energy storage medium suitable for the dimensioning of the system. The DC/AC converter is connected to a switch 7, which in turn is connected to the electric network 3. The output of said switch is connected with the switchgear 13 of the elevator system, i.e., with the general control means of the elevator system, in charge of controlling all the elements thereof (reading of buttons, display, commands for operating doors, motor, etc). Finally, the system comprises management means (or energy manager) 4, connected to the remaining elements of the system, said energy manager 4 being configured to execute the method of the invention through the control of said elements, as detailed below.

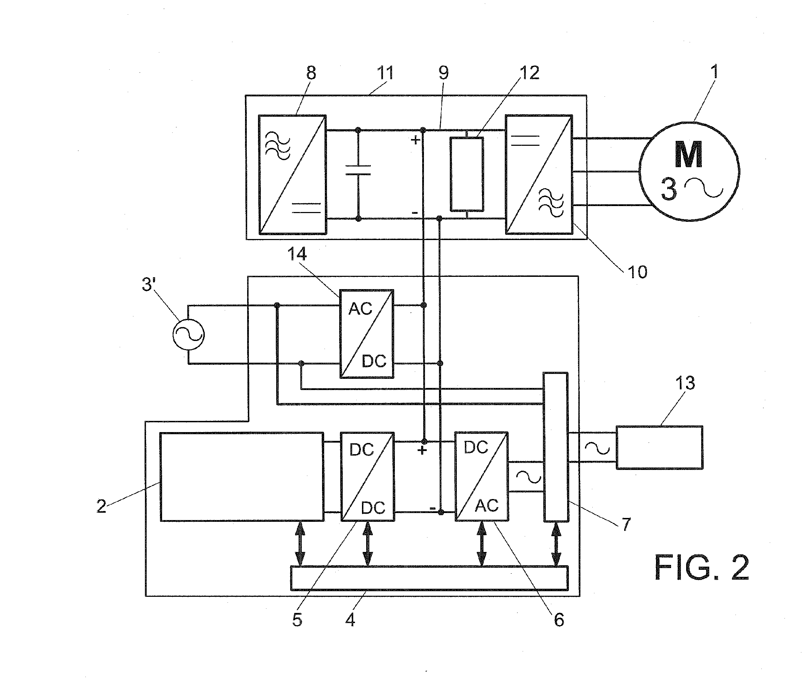

Figure 2 shows a second preferred embodiment of the system of the invention, in this case using a single-phase network 3' as a power supply. For the use of the single-phase network 3', an alternating current-to-direct current (AC/DC) converter 14 which allows connecting the single-phase network 3' to the DC bus 9, to the power converter 5 and to the DC/AC converter 6 is included in the system.

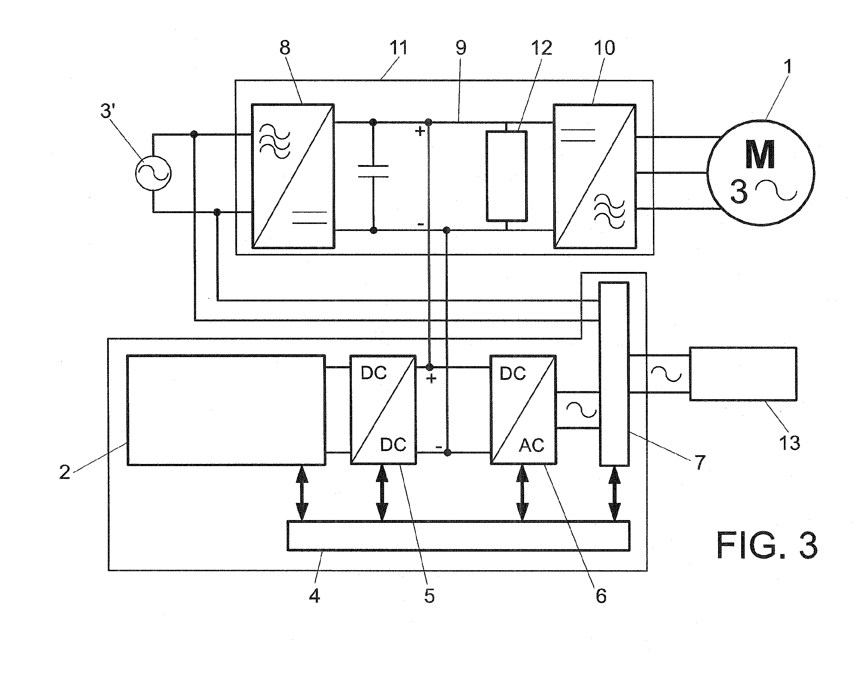

Figure 3 shows a third preferred embodiment of the system, also for a single-phase network 3', in which the single-phase network 3 is connected to the motor through the three-phase variator 11 (suitably adapted to the said single-phase network 3'). The rest of the system does not have variations with respect to the one described for the three-phase network 3 in Figure 1.

It should be observed that what allows the system to use said single-phase network 3 is precisely the required reduction of consumption and of peak power derived from the energy optimization thereof.

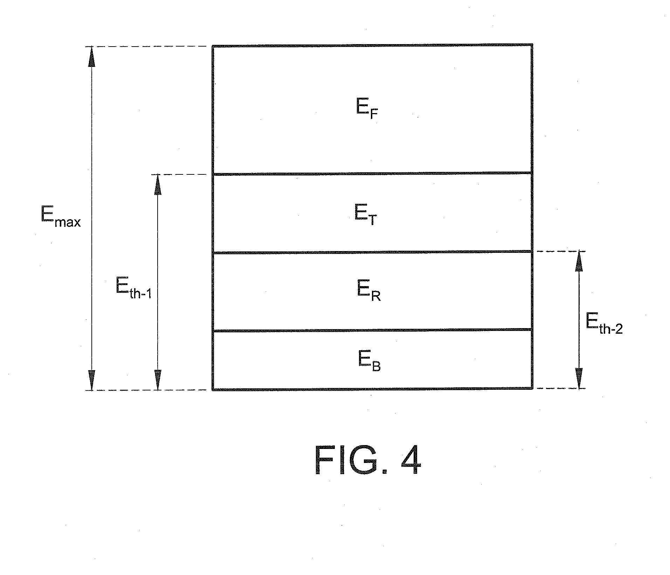

For the application of the method and system of the invention, different energy levels are defined in the storage media 2, as shown in Figure 4:

$-E_B$ Unusable energy of the storage unit. In the event of using ultracapacitors, this threshold is calculated by means of the following expression:

$$E_B = 1/2 * C * (1-K)^2 * V_{max}^2$$

Where:

C: equivalent capacity of the storage unit
$V_{max}$: maximum voltage of the storage unit
K: discharge factor of the storage unit
$-E_R$: is the energy necessary to perform a rescue (safety mode of operation), i.e., to move the car to the closest floor when the network fails.
$-E_T$: energy necessary to complement the energy coming from the network by the storage media in the case of the trip under traction which consumes the most energy. The latter occurs for the longest trip which the car can perform (trip between the two end floors, the first and the last), and for the case of highest imbalance (i.e., for the highest weight difference between the car and the counterweight). The expression for calculating Et:

$$E_T=(E_{t\_0}-P_{net\_max}*t_{max\_trip})/\eta$$

wherein:

$E_{t\_o}$: energy consumed by the motor for a traction with the highest consumption
$P_{net\_max}$: maximum network power desired to be consumed $t_{max\_trip}$: car trip time for a traction with the highest consumption n: efficiency of the storage system.
$-E_F$: is the energy which can be stored in the storage media when the motor is generating energy, i.e., the difference between the maximum storage capacity $E_{max}$ and the sum of the previous energy levels:

$$E_F=E_{max}-E_B-E_R-E_T$$

Two thresholds, $E_{th\_1}$ and $E_{th\_2}$, are defined from these energy levels:

$E_{th\_1}=E_B+E_R+E_T;$
$E_{th\_2}=E_B+E_R;$

The determination of the energy level stored in the storage media at each instant depends on the elements forming said media. For example, in the case of a storage system with ultracapacitors, the voltage thereof is measured, which directly determines the energy level. In a storage system with batteries, a charge meter is included which is a circuit or system estimating the charge status of the battery from voltage, current and temperature measurements, and experimental curves which have been previously obtained from battery characterization tests. The application of any other equivalent means for determining for the stored energy level known in the state of the art will be obvious to a person skilled in the art of.

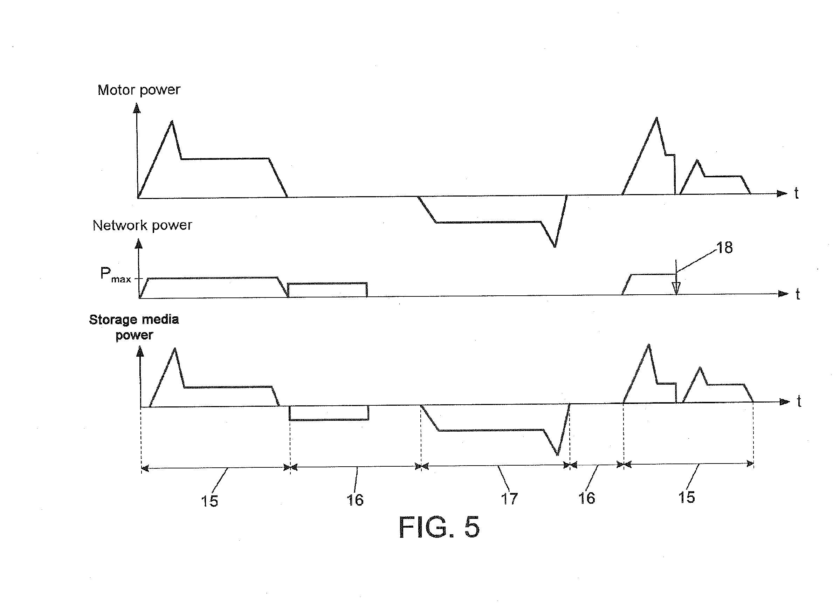

Figure 5 shows three graphs which exemplify the energy flows in the system:

- Motor power. It indicates that the motor consumes energy if it is positive, and that it generates energy if is negative.
- Power provided by the network.
- Power provided from (by) the storage media. It indicates that energy is provided from the storage media to the motor if it is positive, and that energy (either of the motor or of the network) is stored if is negative.

Four consecutives situations are shown which correspond to:

- Motor under traction 15 (i.e., consuming energy)
- Stopped motor 16
- Motor under braking 17 (i.e., generating energy)
- Motor under traction 15 during a network failure 18

These situations are detected by the energy manager, for example by means of measuring of the voltage of the DC bus, which increases when the motor is generating energy. According to the situation detected (i.e., the mode of operation of the motor) and the energy stored in the storage media, the energy manager controls the storage media, the switch and the converters (activating, deactivating, determining modes of operation...), thus determining the energy flow in the system according to the following rules:

- If the motor consumes energy, the energy manager supplies energy thereto, first from the network until reaching a previously defined power limit, and completing the energy requirements with energy from the storage media. The described dimensioning allows maintaining the energy level of said storage media above the threshold $E_{th\_2}$, assuring that the energy necessary for emergency cases (failure in the network) is stored.
- If the motor is stopped (or if its consumption is less than the previously mentioned power limit), the storage media are recharged with energy from the electric network until the level $E_{th\_1}$ is reached.
- If the motor is generating energy, said energy is stored in the storage media. If its limit capacity $E_{max}$, is reached, the excess energy is dispersed through the braking circuit of the variator.
- In the event that there is a failure in the network, the switch starts supplying the switchgear of the elevator system with energy from the storage media, said storage media also providing the motor with sufficient energy to move the car to at least the closest floor and allow the evacuation of the occupants.

In view of this description and figures, the person skilled in the art may understand that the invention had been described according to several preferred embodiments thereof, but that multiple variations can be introduced into said preferred embodiments without departing from the object of the invention as it has been claimed.

**Claims**

1. Energy management method for at least one electric motor (1), comprising:

   - if the motor (1) operates according to a first mode of operation in which it consumes electric energy, supplying electric energy to the motor (1);
   - if the motor (1) operates according to a second mode of operation in which it generates electric energy, storing the energy generated by the motor (1) in electric energy storage media (2) while the energy stored in said storage media (2) is less than a maximum capacity (Emax) of the storage media (2); **characterized in that** it comprises:
   - if the motor (1) is stopped or operates according to the first mode of operation and consumes less energy than a supply threshold of an electric supply network (3, 3'), and the energy stored in the storage media (2) is less than a first storage threshold (Eth_1), storing energy of the electric supply network (3, 3') in the storage media (2), said first storage threshold (Eth_1) being less than the maximum capacity (Emax) of the storage media (2).

2. Method according to claim 1, wherein, if the motor (1) operates according to the first mode of operation in which it consumes electric energy, at least a part of the energy supplied to the motor (1) is extracted from the electric supply network (3, 3'), wherein said energy extracted from the electric supply network (3, 3') is less than or equal to a maximum network power (Pmax).

3. Method according to any of claims 1 and 2, wherein, if the motor (1) operates according to the first mode of operation in which it consumes electric energy, and if the energy stored in the storage media (2) is greater than a second storage threshold (Eth_2), at least a part of the energy supplied to the motor (1) is extracted from the storage media (2), wherein said second storage threshold (Eth_2) is less than the first storage threshold (Eth_1).

4. Method according to any of the previous claims, wherein the motor (1) is a traction motor of an elevator system, said elevator system further comprising a car.

5. Method according to claim 4, which comprises, if there is a failure in the electric supply network (3, 3'), supplying the motor (1) with energy stored in the storage media (2) while the motor (1) operates according to a safety mode of operation.

6. Method according to claim 5, which comprises, if there is a failure in the electric supply network (3, 3'), also supplying motor control means (13) with energy stored in the storage media (2).

7. Energy management system comprising:

   - electric energy storage media (2);
   - a power converter (5) configured to be connected to the energy storage media (2) and to a direct current bus (9) of a variator (11), wherein said bus (9) is configured to be connected to an electric supply network (3, 3') and to at least an electric motor (1) through at least one inverter (10);
   - management means (4) configured to
   - if the motor (1) operates according to a first mode of operation in which it consumes electric energy, supply electric energy to the motor (1) through the bus (9) to which the system is configured to be connected;
   - if the motor (1) operates according to a second mode of operation in which it generates electric energy, extract the energy generated by the motor (1) through the bus (9) to which the system is configured to be connected and store said energy generated by the motor (1) in the electric energy storage media (2), while the energy stored in said storage media (2) is less than a maximum capacity (Emax) of the storage media (2);

   **characterized in that** the management means (4) are furthermore configured to:

   - if the motor (1) stops or operates according to the first mode of operation and consumes less energy than a supply threshold of an electric supply network (3, 3'), and the energy stored in the storage media (2) is less than a first storage threshold (Eth_1), store energy of the electric supply network (3, 3') in the storage media (2), said first storage threshold (Eth_1) being less than the maximum capacity (Emax) of the storage media (2).

8. Management system according to claim 7, wherein the management means (4) are furthermore configured to, if the motor (1) operates according to the first mode of operation in which it consumes electric energy, extract at least a part of the energy supplied to the motor (1) from the electric supply network (3, 3'), wherein said energy extracted from the electric supply network (3, 3') is less than or equal to a maximum network power (Pmax).

9. System according to any of claims 7 and 8, wherein the management means (4) are furthermore configured to, if the motor (1) operates according to the first mode of operation in which it consumes electric energy, and if the energy stored in the storage media (2) is greater than a second storage threshold (Eth_2), extract from the storage media (2) at least a part of the energy supplied to the motor (1), wherein said second storage threshold (Eth_2) is less than the first storage threshold (Eth_1).

10. System according to any of claims 7 to 12, wherein the motor (1) is a traction motor of an elevator system, said elevator system further comprising a car.

11. System according to claim 10, wherein the management means (4) are furthermore configured to, if there is a failure in the electric supply network (3, 3'), supply the motor (1) with energy stored in the storage media (2) while the motor (1) operates according to a safety mode of operation.

12. System according to claim 11, further comprising:

    - a direct current-to-alternating current converter (6) configured to be connected to the direct current bus (9), to the power converter (5), and to a switch (7);
    - a switch (7) configured to be connected to the direct current-to-alternating current converter (6), to the electric supply network (3, 3') and to motor control means (13);
    and wherein the management means (4) are furthermore configured to, if there is a failure in the electric supply network (3, 3'), supply the motor control means (13) with energy stored in the storage media (2) through the direct current-to-alternating current converter (6) and the switch (7).

13. System according to any of claims 7 to 12, also comprising a alternating current-to-direct current converter (14), configured to be connected to the direct current bus (9) and to the electric supply network (3, 3'), wherein said network is a single-phase network (3').

FIG. 1

FIG. 2

FIG. 3

EP 2 336 068 A1

FIG. 4

Motor power

Network power

$P_{max}$

18

Storage media
power

15       16       17       16       15

## FIG. 5

| | Europäisches Patentamt European Patent Office Office européen des brevets | **EUROPEAN SEARCH REPORT** | Application Number EP 10 38 2340 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2010/019126 A1 (OTIS ELEVATOR CO [US]; OGGIANU STELLA M [US]; BLASKO VLADIMIR [US]; TH) 18 February 2010 (2010-02-18) * claims 1-7; figures 1-4 * ----- | 1-11 | INV. B66B1/30 |
| X,P | WO 2009/156953 A1 (BREA IMPIANTI S U R L [IT]; ACQUAVIVA SEBASTIANO [IT]) 30 December 2009 (2009-12-30) * claims 5,6; figures 1, 2 * ----- | 1,2,7,8 | |
| A,D | WO 01/74699 A1 (INVENTIO AG [CH]; EILINGER THOMAS [US]) 11 October 2001 (2001-10-11) * claims 1-9; figures 1-5 * ----- | 1-13 | |
| A,D | WO 01/74703 A1 (INVENTIO AG [CH]; EILINGER THOMAS [US]) 11 October 2001 (2001-10-11) * claims 1-10; figures 1-3 * ----- | 1,7 | |

| | | TECHNICAL FIELDS SEARCHED (IPC) |
|---|---|---|
| | | B66B |

The present search report has been drawn up for all claims

| Place of search | Date of completion of the search | Examiner |
|---|---|---|
| The Hague | 29 March 2011 | Miklos, Zoltan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 38 2340

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2011

| Patent document cited in search report | | Publication date | Patent family member(s) | | Publication date |
|---|---|---|---|---|---|
| WO 2010019126 | A1 | 18-02-2010 | NONE | | |
| WO 2009156953 | A1 | 30-12-2009 | NONE | | |
| WO 0174699 | A1 | 11-10-2001 | AT | 414666 T | 15-12-2008 |
| | | | AU | 4040501 A | 15-10-2001 |
| | | | BR | 0109593 A | 04-02-2003 |
| | | | CA | 2407052 A1 | 11-10-2001 |
| | | | CN | 1419517 A | 21-05-2003 |
| | | | DK | 1268335 T3 | 23-03-2009 |
| | | | EP | 1268335 A1 | 02-01-2003 |
| | | | ES | 2317890 T3 | 01-05-2009 |
| | | | HK | 1052677 A1 | 22-05-2009 |
| | | | IL | 151275 A | 08-03-2007 |
| | | | JP | 2003529511 T | 07-10-2003 |
| | | | US | 2003089557 A1 | 15-05-2003 |
| WO 0174703 | A1 | 11-10-2001 | AT | 414667 T | 15-12-2008 |
| | | | AU | 4040601 A | 15-10-2001 |
| | | | BR | 0109581 A | 28-01-2003 |
| | | | CA | 2400762 A1 | 11-10-2001 |
| | | | CN | 1419518 A | 21-05-2003 |
| | | | EP | 1272418 A1 | 08-01-2003 |
| | | | ES | 2320094 T3 | 19-05-2009 |
| | | | HK | 1054907 A1 | 22-05-2009 |
| | | | IL | 151276 A | 11-02-2007 |
| | | | JP | 2003529512 T | 07-10-2003 |
| | | | PT | 1272418 E | 29-01-2009 |
| | | | US | 2003089556 A1 | 15-05-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200174699 A
- WO 200174703 A